# DEMANDE DE BREVET EUROPEEN

(11) **EP 1 179 451 A1**
(43) Date de publication de la demande: **13.02.2002**
(21) Numéro de dépôt: 01402038.2
(22) Date de dépôt: 27.07.2001
(51) Int. Cl.: B60R 13/02, B60R 13/08

(54) **Porte de véhicule comprenant un panneau maintenu directement sur la structure de la porte**

(30) Priorité: 08.08.2000 FR 0010444
(71) Demandeur: SAI AUTOMOTIVE ALLIBERT INDUSTRIE, 92748 Nanterre (FR)
(72) Inventeur: Marcovecchio, Dominique, 92600 Asnieres sur Seine (FR); Brianceau, Olivier, 60114 Meru (FR)
(74) Mandataire: Lerner, François

(57) **Abrégé**

L'invention a pour objet une porte (1) de véhicule comprenant un habillage (12) et une structure (2) présentant une paroi extérieure (4) et une paroi intérieure (6) dans laquelle est ménagée au moins une ouverture (10).

L'habillage présente un panneau (14) rapporté sur la structure et assurant l'étanchéité par rapport à la paroi intérieure, et un cadre (16) entourant ledit panneau.

Selon l'invention, le panneau est autoporteur, la porte comprend des moyens d'accrochage (20) présentant une première partie (20b, 20c) maintenue sur la structure et une deuxième partie (20a) maintenue sur le panneau, lesdites parties coopérant entre elles pour fixer directement le panneau sur la structure, et le cadre est supporté par le panneau.

## Description

L'invention a pour objet une porte de véhicule notamment automobile. Une telle porte comprend typiquement essentiellement une structure présentant une paroi extérieure et une paroi intérieure dans laquelle est ménagée au moins une ouverture, et un habillage.

L'objet de l'invention vise notamment à réaliser une porte étanche à l'air et à l'humidité, présentant un poids réduit, une bonne isolation acoustique, une grande capacité pour absorber l'énergie en cas de choc, facilement recyclable, facile à assembler et d'un coût restreint.

Il est décrit dans DE-A-43 37 468 une porte dont l'habillage présente un panneau rapporté sur la structure et assurant l'étanchéité par rapport à la paroi intérieure. L'habillage comprend en outre un cadre entourant ledit panneau afin de le maintenir par rapport à la paroi intérieure. Ce cadre est fixé sur la paroi intérieure de la structure par l'intermédiaire de moyens d'accrochage traversant le panneau.

Toutefois, cette réalisation n'est pas pleinement satisfaisante. En effet, l'étanchéité à l'air et à l'humidité, ainsi que l'insonorisation d'une telle porte présentent des faiblesses, en particulier à l'endroit des moyens d'accrochage du cadre sur la paroi intérieure. Il s'avère ainsi bien souvent nécessaire de procéder à des opérations de retouche, afin de respecter le cahier des charges du constructeur. Ces retouches consistant notamment en l'apport d'éléments de mousse autour des moyens de fixation augmentent le coût de la porte et ne permettent pas d'obtenir une qualité irréprochable.

Pour pallier ces différents inconvénients, l'invention propose que le panneau soit autoporteur, que la porte comprenne des moyens d'accrochage présentant une première partie maintenue sur la structure et une deuxième partie maintenue sur le panneau, lesdites parties coopérant entre elles pour fixer directement le panneau sur la structure, et que le cadre soit supporté par le panneau.

Ainsi, on se dispense de trous permettant le passage d'éléments traversant l'épaisseur du panneau et réduisant de fait l'efficacité dudit panneau. En outre, le montage de la porte est facilité.

L'invention propose en outre que le panneau soit réalisé en matière plastique expansée.

Ainsi, le panneau présente un faible poids, une bonne isolation acoustique et une bonne sécurité en cas de choc.

Une autre caractéristique avantageuse permettant d'améliorer la capacité d'insonorisation de la porte, son étanchéité à l'air et à l'humidité consiste en ce que le panneau comprenne une première couche étanche à l'eau et une deuxième couche présentant une meilleure isolation acoustique que la première, lesdites première et deuxième couches étant toutes deux réalisées en matière plastique expansée.

Le fait de réaliser le panneau en plusieurs couches présentant des capacités différentes d'insonorisation et d'étanchéité à l'air et à l'eau, permet d'améliorer la capacité d'insonorisation globale du panneau, tout en conservant une bonne étanchéité à l'air et à l'eau.

Une autre caractéristique de l'invention visant à améliorer l'absorption d'énergie par la porte en cas de choc, tout en maintenant une insonorisation satisfaisante et en réduisant le poids, le coût et l'épaisseur de la porte, consiste en ce que le panneau présente une (des) zone(s) de densité élevée afin d'absorber un choc contre un passager du véhicule et une (des) zone(s) de moindre densité afin de réduire le poids de la porte.

En cas de choc notamment latéral, la porte risque de venir au contact des occupants du véhicule en des zones localisées, situées en particulier en regard de la hanche des occupants. La densité élevée de matériau expansé dans ces zones permet d'intégrer au panneau la fonction d'absorption d'énergie.

L'invention propose en outre que le panneau soit constitué d'éléments en polypropylène expansé et soit au moins en partie recouvert d'une feuille-décor, lesdits éléments étant soudés (agglomérés) entre eux et avec la feuille-décor.

Ainsi, la réalisation du panneau et sa liaison avec la feuille-décor peuvent être obtenues simultanément par fusion du polypropylène.

Une caractéristique de l'invention consiste en ce que le panneau soit constitué d'éléments en polypropylène expansé et recouvert au moins en partie d'un film constituant une surface solide grainée, obtenue par fusion superficielle desdits éléments.

Le panneau peut ainsi être aisément décoré pour un coût réduit.

Afin d'améliorer l'isolation et l'absorption phonique de la porte, l'invention propose que l'habillage comporte au moins une cavité fermée.

Le fait d'emprisonner de l'air dans l'habillage réduit la propagation du bruit à travers l'habillage, et améliore son absorption. En outre, la présence de cette (ces) cavité(s) réduit le poids de l'habillage.

Avantageusement, cette cavité définit une lame d'air s'étendant entre le panneau et le cadre.

Il est ainsi aisé de créer un phénomène de double paroi avec emprisonnement d'air entre elles, en ménageant un espace entre le cadre et le panneau, excepté sur toute la périphérie du cadre.

Afin d'améliorer encore l'étanchéité à l'air et à l'humidité, ainsi que la capacité d'insonorisation de la porte, l'invention propose que ledit panneau intègre des moyens d'étanchéité s'étendant sur toute la périphérie du panneau et venant au contact de ladite paroi intérieure.

Cette solution simple, peu onéreuse et ne compliquant pas le montage de la porte réduit notablement les fuites entre le panneau et la paroi intérieure, puisque les moyens d'étanchéité entourent complètement l'ouverture.

Avantageusement, les moyens d'étanchéité comprennent une nervure relativement rigide et une lèvre relativement souple.

La nervure plus rigide que la lèvre assure l'essentiel de l'étanchéité. La lèvre, du fait de sa plus grande souplesse, complète l'étanchéité sans compliquer le montage de la porte dans la mesure où elle n'apporte qu'une résistance modérée.

Selon une autre caractéristique avantageuse de l'invention visant également à améliorer la capacité d'insonorisation de la porte, son étanchéité à l'air et à l'humidité, l'invention propose que :
- le panneau présente des réceptacles destinés à recevoir des accessoires en les englobant,
- le panneau intègre des canaux recevant des fils électriques destinés à être reliés aux accessoires,
- le passage des fils électriques à travers le panneau soit centralisé, de sorte que les trous traversant le panneau soient limités à un passage centralisé des fils électriques, un passage destiné à la commande d'ouverture de la porte depuis l'intérieur du véhicule, éventuellement un passage destiné au maintien sur la structure de la poignée de manoeuvre de la porte et éventuellement un passage en regard d'un haut-parleur.

Cette solution permet en particulier de pallier les faiblesses de l'art antérieur dues aux passages ménagés dans le panneau pour recevoir les accessoires. Le nombre de passages à travers le panneau est réduit, ce qui augmente son efficacité du point de vue insonorisation et étanchéité à l'eau et à l'air. Certains passages pourront éventuellement être communs. Le terme "éventuellement" signifie que dans certains cas, on pourrait se dispenser de ces passages.

L'invention propose en outre que le panneau intègre des canaux destinés à recevoir des fils ou des câbles, lesdits canaux présentant successivement en section une forme sensiblement en U et une forme sensiblement en Ω.

Les portions de canaux en forme de Ω définissent des clips intégrés au panneau pour maintenir les fils ou les câbles dans les canaux, tandis que les portions en forme de U permettent une insertion plus facile des fils dans les canaux.

Afin d'accroître encore les propriétés du panneau, l'invention propose que le panneau présente une partie s'insérant dans ladite ouverture. Cette solution n'augmente pas l'encombrement de la porte puisque ladite partie du panneau vient occuper une zone qui était vide pour l'essentiel.

Afin de fixer le panneau sur la structure, l'invention propose qu'avantageusement, les moyens d'accrochage comprennent des modules constitués d'une agrafe liée à un porte-agrafe maintenu sur le panneau par soudage et d'un trou ménagé dans la paroi intérieure dans lequel s'insère ladite agrafe.

L'invention va apparaître encore plus clairement dans la description qui va suivre, faite en référence aux dessins annexés dans lesquels :
- la figure 1 est une vue en coupe selon le plan repéré I-I aux figures 3 et 4 d'une porte conforme à l'invention,

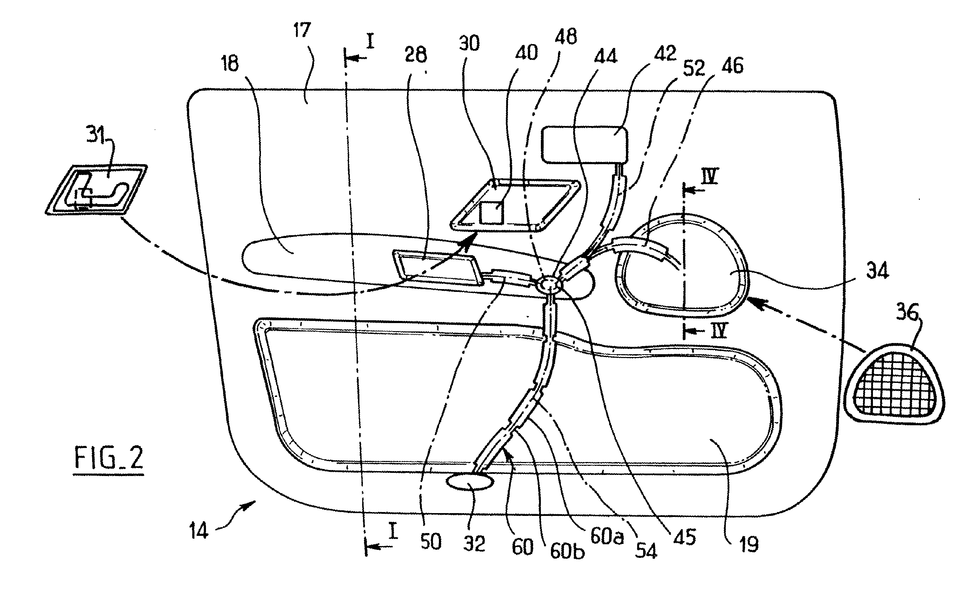

- la figure 2 est une vue selon la flèche repérée II à la figure 1 du seul panneau de la porte,
- la figure 3 est une vue selon la flèche repérée III à la figure 1 du seul panneau de la porte,
- la figure 4 est une vue en coupe selon le plan repéré IV-IV à la figure 2,
- la figure 5 est une vue conforme à la figure 1 d'une variante de réalisation.

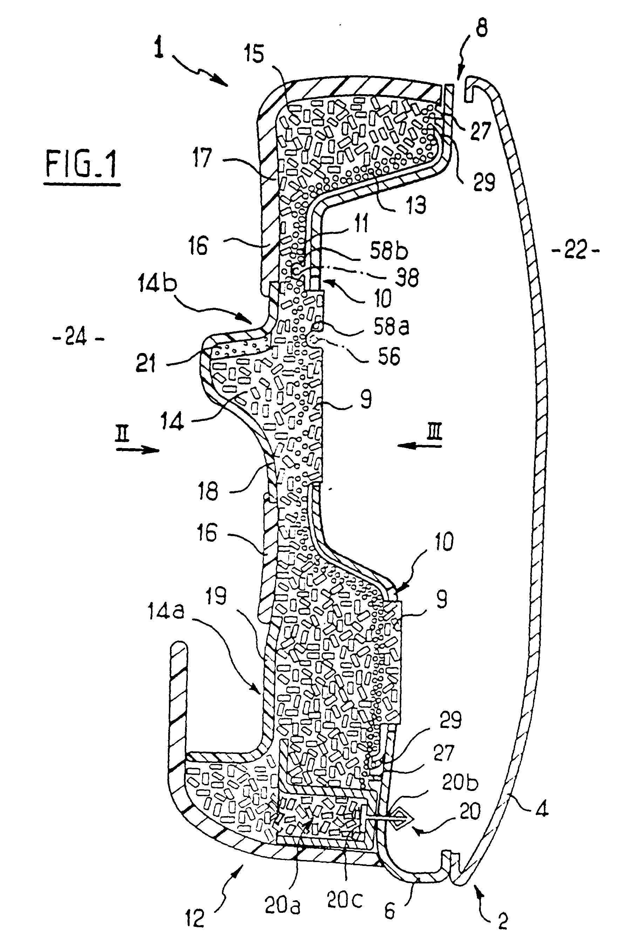

La figure 1 représente schématiquement une porte 1 de véhicule automobile. Cette porte comprend une structure 2 et un habillage 12.

La structure 2, ici en tôle (elle pourrait également être en matériau composite ou en plastique), comprend une paroi extérieure 4 et une paroi intérieure 6 soudées l'une à l'autre, et destinées notamment à recevoir entre elles une vitre (non représentée) coulissant dans une fente 8, ainsi qu'un mécanisme de lève-vitre (non représenté). La paroi intérieure 6 présente des ouvertures 10 permettant notamment le montage du mécanisme de lève-vitre et le passage de câbles.

L'habillage 12 comprend un panneau autoporteur 14 présentant une surface extérieure 11 et une surface intérieure 17, un cadre 16 fixé par collage sur le panneau 14 et des moyens d'accrochage 20 maintenant le panneau 14 sur la structure 2.

Le panneau rigide 14 est constitué de matière plastique expansée, ici des éléments agglomérés. Sa surface intérieure 17 est recouverte de médaillons décoratifs 18, 19 respectivement à l'endroit de l'accoudoir et du vide-poche. Le cadre 16 a principalement pour fonction de protéger le panneau et d'améliorer son aspect. Il est réalisé à base de matière plastique, avantageusement polyoléfinique, tel que du polypropylène, éventuellement additionnée de fibres de bois. Il présente des lumières à l'endroit de l'accoudoir et du vide-poche afin de laisser apparaître les médaillons décoratifs 18, 19.

Les moyens d'accrochage 20 comprennent ici plusieurs modules disposés en périphérie du panneau 14, le long de son bord inférieur et de ses bords latéraux. Chacun de ces modules est constitué d'un porte-agrafe 20a rapporté, s'insérant dans le panneau 14 auquel il est fixé par soudage à ultrasons, d'un trou 20b ménagé dans la paroi intérieure 6 et d'une agrafe 20c maintenue sur le porte-agrafe 20a et s'insérant dans le trou 20b de la paroi 6 pour y être retenue.

En alternative, les porte-agrafe seraient fixés sur la paroi intérieure 6 et le panneau 14 présenterait des trous dans lesquels s'inséreraient les agrafes.

Afin de réaliser l'étanchéité entre l'environnement 22 du véhicule et l'habitacle 24, de sorte que l'humidité et l'air extérieurs ne puissent pas pénétrer à l'intérieur de l'habitacle par l'intermédiaire de la fente 8 et des ouvertures 10, le panneau 14 intègre des moyens d'étanchéité 27, 29 venant au contact de la paroi intérieure 6. Ces moyens d'étanchéité sont constitués par une nervure périmétrique 27 et une lèvre périmétrique 29 plus souple relativement à la nervure 27. Ils s'étendent sur toute la périphérie du panneau 14 et définissent un contour fermé entourant les ouvertures 10. Les moyens d'accrochage 20 sont disposés à l'extérieur dudit contour fermé.

Le panneau 14 comprend plus précisément deux couches 13, 15. L'une des couches est hydrofuge et assure principalement la fonction d'étanchéité à l'air et à l'humidité entre l'environnement 22 et l'habitacle 24. Il s'agit ici de la couche extérieure 13 intégrant la surface extérieure 11 et venant en regard de la paroi intérieure 6. Elle intègre les moyens d'étanchéité 27, 29.

La couche intérieure 15 est disposée du côté de l'habitacle 24 et vient au contact du cadre 16 par l'intermédiaire de la surface intérieure 17 qu'elle intègre. Elle présente de meilleures qualités d'isolation acoustique que la couche extérieure 13. Pour ce faire, elle est constituée avantageusement d'éléments sensiblement tubulaires présentant une longueur comprise entre 3 millimètres et 6 millimètres, un diamètre intérieur inférieur à 1 millimètre et un diamètre extérieur compris entre 2 millimètres et 4 millimètres. La couche extérieure 13 est quant à elle avantageusement constituée d'éléments sensiblement sphériques dont le diamètre est compris entre 1 millimètre et 3 millimètres.

Le panneau 14 est réalisé en plaçant, dans un moule, la feuille décor 18 et un bloc mousse 21 lié à l'envers de la feuille décor 18, les éléments tubulaires puis les éléments sphériques en polypropylène expansé et en injectant de la vapeur à température élevée pour faire fondre le polypropylène, de sorte que les éléments tubulaires et sphériques se soudent d'une part entre eux pour s'agglomérer et d'autre part se soudent avec la feuille décor 18 et le bloc de mousse 21 pour les maintenir.

Le bloc de mousse 21 est ainsi interposé entre la feuille décor 18 et le panneau 14. Il permet d'obtenir un toucher plus souple avec l'accoudoir. Il est avantageusement réalisé en matière plastique polyoléfinique pour faciliter son recyclage avec le panneau 14. De préférence, cette mousse sera réalisée en polyéthylène expansé.

La feuille décor 18 peut être réalisée dans les matériaux usuels tels notamment que du polychlorure de vinyle, du polypropylène, du tissu, du cuir, de la moquette ou par flocage.

Le film 19 est réalisé en grainant la surface du moule en regard et en concentrant l'injection de vapeur à température élevée, afin de faire fondre superficiellement les éléments en polypropylène expansé et constituer une surface solide grainée définissant ledit film 19.

Le panneau 14 présente en outre des zones 14a, 14b présentant des densités différentes. La zone 14a, destinée à venir sensiblement en regard de la hanche d'un occupant du véhicule présente une densité élevée en comparaison de la zone 14b. La densité plus élevée de la zone 14a lui permet d'avoir une meilleure résistance aux contraintes et par suite un pouvoir d'absorption d'énergie en cas de choc supérieur. Par conséquent, elle sera mieux à même de protéger l'occupant du véhicule.

En outre, l'épaisseur de la zone 14a est accrue par rapport à celle de la zone 14b, ce qui augmente encore sa capacité d'absorption d'énergie et compense la moindre insonorisation acoustique par rapport à la zone de moindre densité 14b.

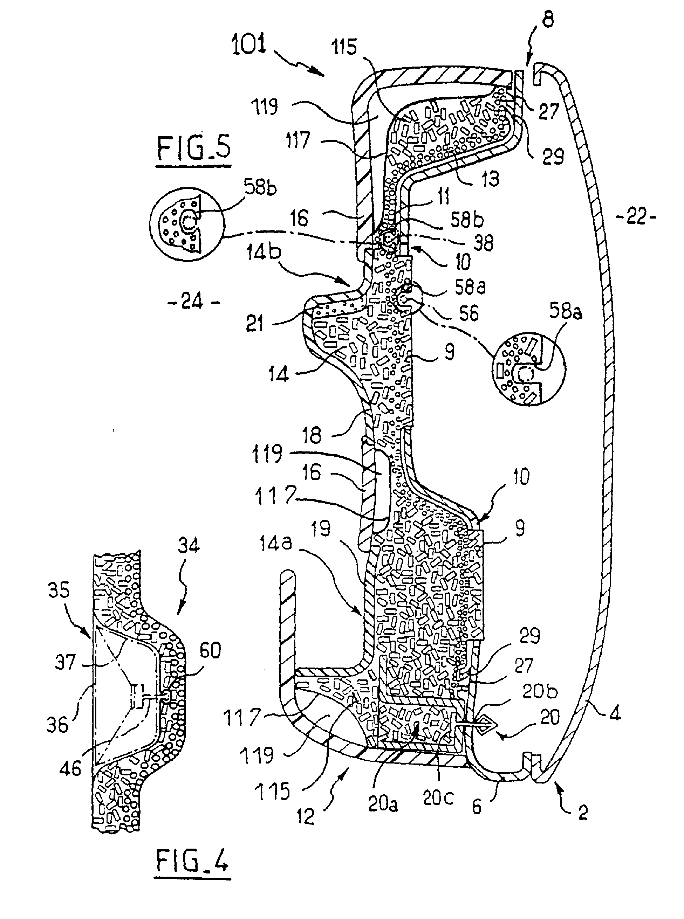

Par ailleurs, le panneau présente différents réceptacles 28, 30, 32, 34 pour recevoir des accessoires. Les réceptacles illustrés 28, 30, 32, 34 visent respectivement à recevoir une platine lève-vitre, une unité de poignée intérieure de porte, un dispositif éclaireur et un haut-parleur. Tel qu'illustré en particulier à la figure 4, l'essentiel des réceptacles forme un lamage dépourvu de passage à travers le panneau 14, de sorte qu'ils englobent l'accessoire et l'isolent de la paroi intérieure 6 par la présence des deux couches 13, 15 du panneau. Ils ne sont donc, pour l'essentiel, couverts que sur la face intérieure 17.

Plus précisément, la figure 4 représente le réceptacle 34, ainsi qu'en trait mixte, un module 35 comprenant un haut-parleur 36, son fil électrique 46 et un caisson 37 supportant le haut-parleur 36 et formant caisse de résonance.

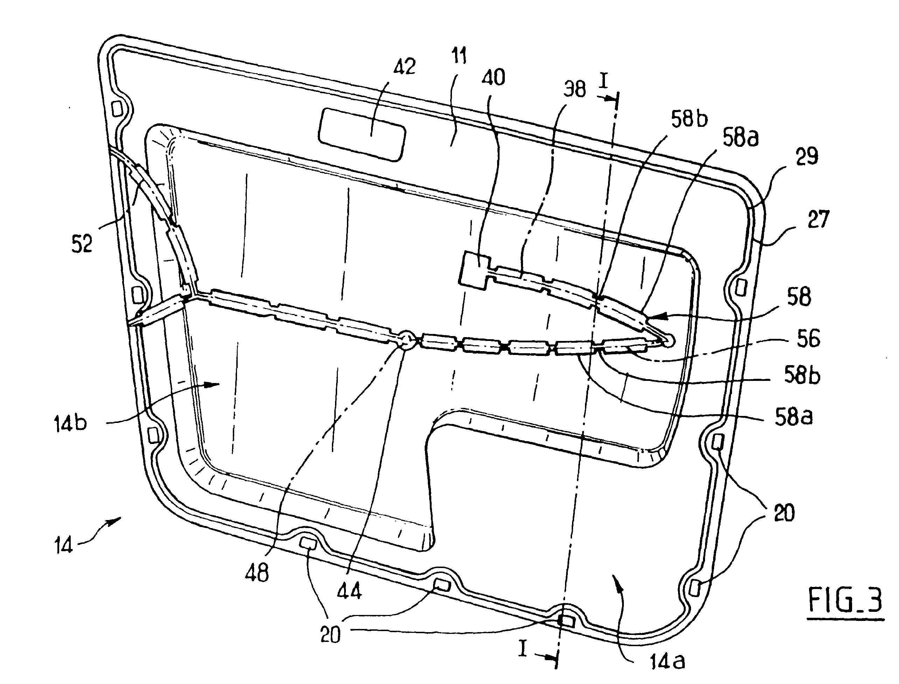

Seul le réceptacle 30 destiné à recevoir la poignée intérieure 31 de commande d'ouverture de porte présente un passage 40 à travers le panneau, afin de permettre à la commande d'ouverture de porte d'actionner un câble 38, représenté en trait mixte à la figure 3, s'étendant entre le panneau 14 et la paroi extérieure 6.

Le panneau présente également deux autres passages 42, 44 à travers le panneau autoporteur 14. Le passage 42 permet de maintenir la poignée de manoeuvre de la porte fermement en faisant passer son support (non représenté) à travers ledit passage 42 pour le fixer sur la paroi intérieure 6. Le passage 44 permet, quant à lui, à un câble électrique 48 regroupant l'ensemble des fils électriques 46, 50, 52 et 54 de traverser le panneau 14. Le passage 44 est fermé par une membrane d'étanchéité 45 à travers laquelle passe le câble 48.

Le fil électrique 50 sera relié à la platine lève-vitre pour alimenter le moteur électrique correspondant, le fil électrique 52 sera relié à une extrémité à une commande de rétroviseur et à l'autre extrémité à un dispositif électrique de déplacement du rétroviseur, le fil électrique 54 alimentera le dispositif éclaireur, tandis qu'un fil électrique 56 sera relié à un dispositif électrique de verrouillage de la serrure.

Ces fils électriques sont maintenus dans des canaux 58, 60 creusés dans le panneau respectivement tant sur la surface extérieure 11 que sur la surface intérieure 17. Ils comportent successivement une portion 58a, 60a présentant une section en forme de U, puis une portion 58b, 60b présentant une section en forme de Ω dont l'ouverture réduite forme un clip retenant les fils électriques (figure 5, vues agrandies).

La figure 5 illustre une variante de réalisation. Les éléments inchangés portent à la figure 5 le même repère qu'aux figures précédentes, tandis que les éléments modifiés portent un repère augmenté de 100.

Cette variante de porte 101 se distingue de la porte 1 en ce qu'elle comporte des cavités fermées 119 s'étendant le long du cadre 16 et définissant des lames d'air. Ces cavités 119 sont ménagées en creux dans la couche intérieure 115 du panneau 114. Elles s'étendent en regard du cadre 16 en laissant une marge de quelques centimètres avec le bord du cadre 16, que ce soit en périphérie du cadre 16 ou autour des lumières réalisées dans le cadre 16. Cette marge permet d'une part d'empêcher l'air contenu à l'intérieur des cavités 119 d'en sortir et d'autre part de ne pas perturber le maintien de la feuille décor 18.

L'épaisseur des lames d'air 119 est sensiblement constant et représente environ entre le quart et la moitié de l'épaisseur du panneau 14.

Bien entendu, l'invention n'est nullement limitée aux dessins qui ont été décrits à titre d'exemple non limitatif. Ainsi, il pourrait ne pas exister de frontière franche entre la couche extérieure et la couche intérieure du panneau, de sorte qu'il y ait une variation continue des caractéristiques du panneau entre la surface extérieure et la surface intérieure.

On pourrait ménager un passage dans le panneau en regard du haut-parleur afin d'utiliser le volume situé entre la paroi extérieure et la paroi intérieure comme caisse de résonance. L'étanchéité serait réalisée par une feuille non-tissée formant membrane et fermant ledit passage.

On pourrait également réduire le nombre de passages à travers le panneau en les regroupant.

On pourrait par ailleurs souder les porte-agrafe sur la surface extérieure 13 du panneau 14 au lieu de les insérer dans le panneau, dans la mesure où la résistance du panneau 14 le permet.

## Revendications

1. Porte (1) de véhicule comprenant essentiellement une structure (2) et un habillage (12), la structure présentant une paroi extérieure (4) et une paroi intérieure (6) dans laquelle est ménagée au moins une ouverture (10), et ledit habillage présentant :
- un panneau (14) rapporté sur la structure et assurant l'étanchéité par rapport à la paroi intérieure (6), et
- un cadre (16) entourant ledit panneau,
**caractérisée en ce que** :
- le panneau est autoporteur,
- la porte comprend des moyens d'accrochage (20) présentant une première partie (20b, 20c) maintenue sur la structure et une deuxième partie (20a) maintenue sur le panneau, lesdites parties coopérant entre elles pour fixer directement le panneau sur la structure, et
- le cadre est supporté par le panneau.

2. Porte selon la revendication 1, **caractérisé en ce que** le panneau est réalisé en matière plastique expansée.

3. Porte selon la revendication 2, **caractérisée en ce que** le panneau (14) comprend une première couche (13) étanche à l'eau et une deuxième couche (15) présentant une meilleure isolation acoustique que la première, lesdites première et deuxième couches étant toutes deux réalisées en matière plastique expansée.

4. Porte selon la revendication 3, **caractérisée en ce que** la deuxième couche (15) est constituée d'éléments tubulaires d'une longueur comprise entre 3 millimètres et 6 millimètres et un diamètre extérieur compris entre 2 millimètres et 4 millimètres.

5. Porte selon l'une quelconque des revendications 2 à 4, **caractérisée en ce que** le panneau (14) présente une (des) zone(s) (14a) de densité élevée afin d'absorber un choc contre un passager du véhicule et une (des) zone(s) (14b) de moindre densité afin de réduire le poids de la porte.

6. Porte selon l'une quelconque des revendications précédentes, **caractérisée en ce que** le panneau (14) est constitué d'éléments en polypropylène expansé et est au moins en partie recouvert d'une feuille-décor (18), lesdits éléments étant soudés entre eux et avec la feuille-décor.

7. Porte selon la revendication 6, **caractérisé en ce qu'**elle intègre une couche de mousse (21) en matière plastique polyoléfinique entre la feuille-décor (18) et le panneau (14).

8. Porte selon l'une quelconque des revendications 2 à 7, **caractérisée en ce que** le panneau (14) est constitué d'éléments en polypropylène expansé et est au moins en partie recouvert d'un film (19) constituant une surface solide grainée, obtenue par fusion superficielle desdits éléments.

9. Porte selon l'une quelconque des revendications précédentes, **caractérisée en ce que** l'habillage (12) comporte au moins une cavité fermée.

10. Porte selon la revendication 9, **caractérisé en ce que** cette cavité définit une lame d'air s'étendant entre le panneau (14) et le cadre (16).

11. Porte selon l'une quelconque des revendications précédentes, **caractérisée en ce que** ledit panneau intègre des moyens d'étanchéité (27, 29) s'étendant sur toute la périphérie du panneau (14) et venant au contact de ladite paroi intérieure (6).

12. Porte selon la revendication 11, **caractérisée en ce que** les moyens d'étanchéité comprennent une nervure (27) relativement rigide et une lèvre (29) relativement souple.

13. Porte selon l'une quelconque des revendications précédentes, **caractérisée en ce que** :
- le panneau présente des réceptacles (28, 30, 32, 34) destinés à recevoir des accessoires (36) en les englobant,
- le panneau intègre des canaux (58, 60) recevant des fils électriques (46, 48, 50, 52, 54, 56) destinés à être reliés aux accessoires (36),
- le passage des fils électriques à travers le panneau est centralisé, de sorte que les trous traversant le panneau soient limités à un passage (44) centralisé des fils électriques, un passage (40) destiné à une commande d'ouverture de la porte depuis l'intérieur du véhicule, éventuellement un passage (42) destiné au maintien sur la structure de la poignée de manoeuvre de la porte et éventuellement un passage en regard d'un haut-parleur.

14. Porte selon l'une quelconque des revendications précédentes, **caractérisé en ce que** le panneau (14) intègre des canaux (50, 60) destinés à recevoir des fils ou des câbles, lesdits canaux présentant successivement en section une forme sensiblement en U et une forme sensiblement en Ω.

15. Porte selon l'une quelconque des revendications précédentes, **caractérisée en ce que** le panneau (14) présente une partie (9) s'insérant dans ladite ouverture.

16. Porte selon l'une quelconque des revendications précédentes, **caractérisée en ce que** les moyens d'accrochage (20) comprennent des modules constitués d'une agrafe (20c) liée à un porte-agrafe (20a) maintenu sur le panneau (14) par soudage et d'un trou (20b) ménagé dans la paroi intérieure (6) dans lequel s'insère ladite agrafe.
